# EUROPÄISCHE PATENTSCHRIFT

(11) **EP 2 712 768 B1**
(45) Veröffentlichungstag und Bekanntmachung des Hinweises auf die Patenterteilung: **23.09.2015**
(21) Anmeldenummer: 13186486.0
(22) Anmeldetag: 27.09.2013
(51) Int. Cl.: B60R 13/02, B60R 19/02

(54) **Verschlussdeckel**
Closure cap
Couvercle de fermeture

(30) Priorität: 01.10.2012 DE 102012109305
(43) Veröffentlichungstag der Anmeldung: 02.04.2014
(73) Patentinhaber: REHAU AG + Co, 95111 Rehau (DE)
(72) Erfinder: Grammer, Martin, 71640 Ludwigsburg (DE); Lemke, Robert, 06366 Köthen (DE); Tischler, Wolfgang, 08529 Plauen (DE)
(74) Vertreter: Sturm, Christoph

(56) Entgegenhaltungen:
- EP-A2- 1 331 138
- FR-A1- 2 759 747
- FR-A1- 2 913 385

## Beschreibung

Die Erfindung betrifft einen Verschlussdeckel zum Verschließen einer Öffnung, insbesondere eines Kraftfahrzeugs, gemäß dem Oberbegriff von Anspruch 1.

Im Stand der Technik sind Verschlussdeckel bekannt geworden, bei welchen ein im Wesentlichen flächiges Deckelelement mit Haken versehen sind, so dass nach dem Eingreifen der Haken in die zu verschließende Öffnung, die Haken den Öffnungsrand oder einen Steg in der Öffnung hintergreifen, derart dass der Verschlussdeckel in der Öffnung festgelegt ist.

Durch die Hakengeometrie kann aufgrund einer beispielsweisen Längentoleranz ein Einsetzen in die zu verschließende Öffnung auch so erfolgen, dass der Verschlussdeckel nicht direkt an dem Öffnungsrand anliegt, sondern ein Klappen und Vibrieren möglich ist. Ist in einer anderen Toleranzlage der Haken zu kurz, so kann das Hintergreifen des Öffnungsrands nur unvollständig erfolgen, so dass der Verschlussdeckel nicht sicher fixiert ist, so dass er bei Vibrationen des Fahrzeugs auch aus der Öffnung wieder herausfallen kann. Ein solcher Verschlussdeckel ist beispielsweise durch die DE 102 03 416 B4 oder die DE 20 2009 002 796 U1 bekannt geworden. Die DE 102 03 416 B4 offenbart einen Verschlussdeckel nach dem Oberbegriff von Anspruch 1.

Auch ist der Verschlussdeckel in einer Richtung in der Ebene des Verschlussdeckels nicht zentriert, so dass er auch in der Ebene des Verschlussdeckels nicht eindeutig definiert in die Öffnung eingesetzt ist.

Daher ist es die Aufgabe der vorliegenden Erfindung einen Verschlussdeckel zu schaffen, welche einfach aufgebaut ist aber dennoch in der Öffnung auch bei Toleranzabweichungen sicher gehalten ist und auch in der Ebene des Verschlussdeckels zentriert ist.

Die Aufgabe wird mit den Merkmalen von Anspruch 1 gelöst.

Ein Ausführungsbeispiel der Erfindung betrifft einen Verschlussdeckel mit einem im Wesentlichen flächigen Deckelelement mit einem abgewinkelten Halteelement und einem bogenförmigen Federclip, welcher von dem flächigen Deckelelement absteht, wobei der Federclip ausgehend von dem Deckelelement zwei beabstandete und derart schräg angeordnete erste Schenkel aufweist, die von einander weg gerichtet sind, wobei die beiden ersten Schenkel durch einen Bügel miteinander verbunden sind. Dadurch wird erreicht, dass mit dem Federclip das flächige Deckelelement an die Öffnung angedrückt wird, in welche der Verschlussdeckel eingesetzt ist.

Dabei ist der Bügel M-förmig aus zwei äußeren zweiten Schenkeln und zwei inneren dritten Schenkeln ausgebildet. Die äußeren zweiten Schenkel sind aufeinander zu geneigt und die zwei dritten Schenkel sind voneinander weg geneigt, so dass die M-förmige Kontur erzeugt wird.

Auch ist es zweckmäßig, wenn jeweils einer der beiden äußeren zweiten Schenkel mit einem der ersten Schenkel verbunden sind, wobei zwischen dem ersten Schenkel und dem zweiten Schenkel ein Winkel eingeschlossen ist. Dadurch wird eine Kontur erreicht, die vorteilhaft nach Überwinden der breitesten Stelle beim Einsetzen in die Öffnung ein selbsteinziehender Effekt entsteht.

Vorteilhaft ist es, wenn jeweils einer der beiden äußeren zweiten Schenkel mit einem der dritten Schenkel verbunden sind, wobei zwischen dem zweiten Schenkel und dem dritten Schenkel ein Winkel eingeschlossen ist. Dadurch wird ein Federelement erzeugt, das bei Krafteinwirkung in gewissem Maße nachgibt und dennoch für einen sicheren Halt in der Öffnung sorgt.

Weiterhin ist es vorteilhaft, wenn die beiden dritten Schenkel miteinander verbunden sind, wobei zwischen den dritten Schenkeln ein Winkel eingeschlossen ist. Dadurch wir ebenso ein Federelement erzeugt, das bei Krafteinwirkung in gewissem Maße nachgibt und dennoch für einen sicheren Halt in der Öffnung sorgt.

Weiterhin ist es zweckmäßig, wenn jeweils einer der beiden äußeren zweiten Schenkel mit einem der ersten Schenkel bogenförmig miteinander verbunden ausgebildet sind und/oder jeweils einer der beiden äußeren zweiten Schenkel mit einem der dritten Schenkel bogenförmig miteinander verbunden ausgebildet sind und /oder die beiden dritten Schenkel bogenförmig miteinander verbunden ausgebildet sind. Dadurch wird eine alternative Ausführungsform geschaffen, die einen fließenden Übergang der Schenkel zeigt.

Vorteilhaft ist es auch, wenn weiterhin Zentrierelemente vorgesehen sind, wie stegartig von dem flächigen Deckelelement vorstehen. Dadurch kann der Verschlussdeckel zentriert in der Öffnung aufgenommen werden.

Auch ist es vorteilhaft, wenn zwischen den beiden ersten Schenkeln ein erster Steg angeordnet ist. Dadurch kann in unmittelbarer Nähe zu dem Federclip ein Anschlag zur Zentrierung eingesetzt werden, um die Kraftbeaufschlagung zur Zentrierung möglichst unmittelbar aufbringen zu können.

Auch ist es vorteilhaft, wenn im Flächenbereich zwischen dem abgewinkelten Halteelement und dem bogenförmigen Federclip zwei zweite Stege beabstandet voneinander angeordnet sind. Dadurch kann eine Zentrierung eine Zentrierung erfolgen, in einer Richtung senkrecht zur Zentrierung mittels des ersten Stegs.

Dabei ist es zweckmäßig, wenn die zweiten Stege im Schnitt u-förmig ausgebildet sind. Dadurch kann mittels der beiden Endbereiche der u-förmigen Stege auf gegenüberliegenden Seiten eine Doppelzentrierung erzielt werden, wodurch eine vorteilhafte Ausrichtung erfolgt.

Auch ist es zweckmäßig, wenn das flächige Deckelelement an seinem Rand einen seitlich hochstehenden Kragen aufweist. Dadurch kann eine günstige Abdichtung mit dem Verschlusselement erzielt werden.

Damit das Verschlusselement nach einem Herausnehmen aus der Öffnung nicht verloren geht, kann mit dem flächigen Deckelelement ein Fangelement verbunden sein.

Im Folgenden wird die Erfindung anhand eines Ausführungsbeispiels unter Bezugnahme auf die Zeichnung detailliert erläutert. In der Zeichnung zeigen:
- Figur 1: eine schematische perspektivische Darstellung eines Verschlussdeckels,
- Figur 2: eine schematische perspektivische Darstellung eines Verschlussdeckels,
- Figur 3: eine schematische perspektivische Darstellung eines Verschlussdeckels,
- Figur 4: eine schematische Darstellung eines Federclips,
- Figur 5: ein Diagramm, und
- Figur 6: ein Diagramm.

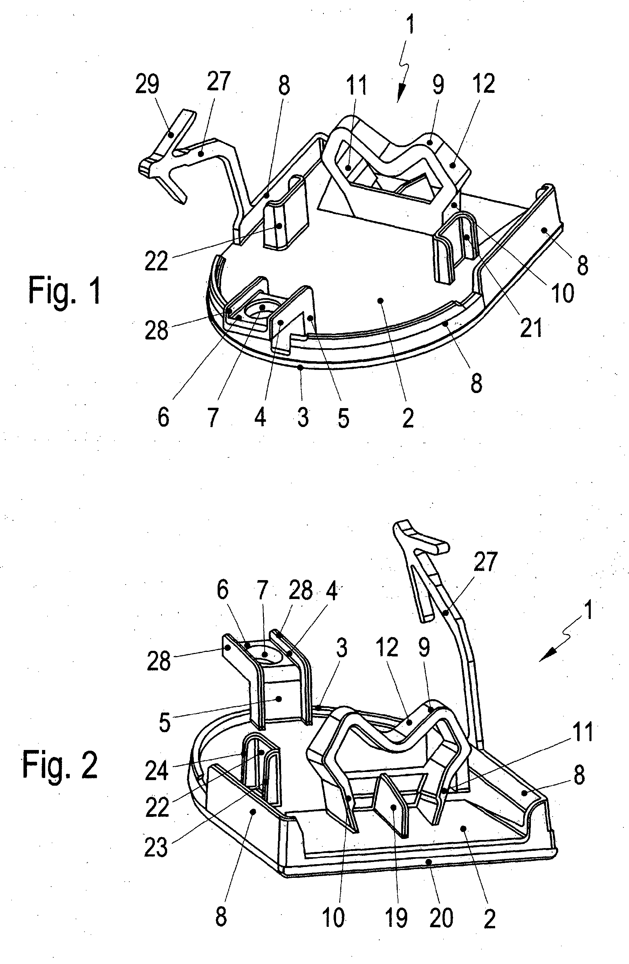

Die Figuren 1, 2 und 3 zeigen einen Verschlussdeckel 1 in jeweils einer anderen perspektivischen Darstellung. Der Verschlussdeckel 1 ist bevorzugt ein Verschlussdeckel 1 zum Verschließen einer Öffnung in einem Fahrzeug, wie beispielsweise eine Öffnung, in welcher sich eine Abschleppöse des Fahrzeugs befindet oder dort einschraubbar ist. Diese Abschleppösen sind üblicherweise im Stoßfänger des Fahrzeugs angeordnet und sind mit einem Verschlussdeckel abgedeckt, so dass sie nur zugänglich sind, wenn der diesbezügliche Verschlussdeckel 1 entnommen ist.

Der Verschlussdeckel 1 weist ein im Wesentlichen flächiges Deckelelement 2 auf, das im Ausführungsbeispiel der Figuren 1, 2 und 3 schildartig ausgebildet ist. Schildartig bedeutet in diesem Falle, dass die Form durch ein Rechteck mit einem daran sich anschließenden etwa halbkreisförmigen Bereich ergänzt wird, so dass in einem ersten Bereich die Grundform rechteckig ist und in einem zweiten benachbarten Bereich die Grundform etwa halbrund ist.

An der Rückseite des flächigen Deckelelements 2 ist am Rand 3 des flächigen Deckelelements ein abgewinkeltes Halteelement 4 angeordnet, wobei das abgewinkelte Halteelement 4 einen Arm 5 aufweist, der im Wesentlichen senkrecht zur Ebene des flächigen Deckelelements 2 ausgerichtet ist, wobei sich an diesem Arm 5 ein zweiter Arm 6 anschließt, welcher im Wesentlichen in einer Ebene liegt, die parallel zur Ebene des flächigen Deckelelements 2 ausgerichtet ist. In den Figuren 1, 2 und 3 ist zu erkennen, dass in dem Arm 6 eine Öffnung 7 angeordnet ist, die eine kreisförmige Kontur aufweist.

An den Rändern des Halteelements 4 bzw. an den Armen 5, 6 ist jeweils ein hochstehender Randbereich 8 vorgesehen, so dass der Arm 5, 6 jeweils im Schnitt U-förmig ausgebildet ist. Der Arm 6 steht dabei über den Rand 3 hinaus vor, so dass der Arm 6 in die Öffnung, in welche das Verschlusselement verschließen soll, eingreifen kann und den Randbereich der Öffnung hintergreifen kann.

Dabei kann die Öffnung 7 mit einem vorspringenden Zapfen des Randbereichs der zu verschließenden Öffnung eingegriffen werden, um eine formschlüssige Verbindung zu gewährleisten.

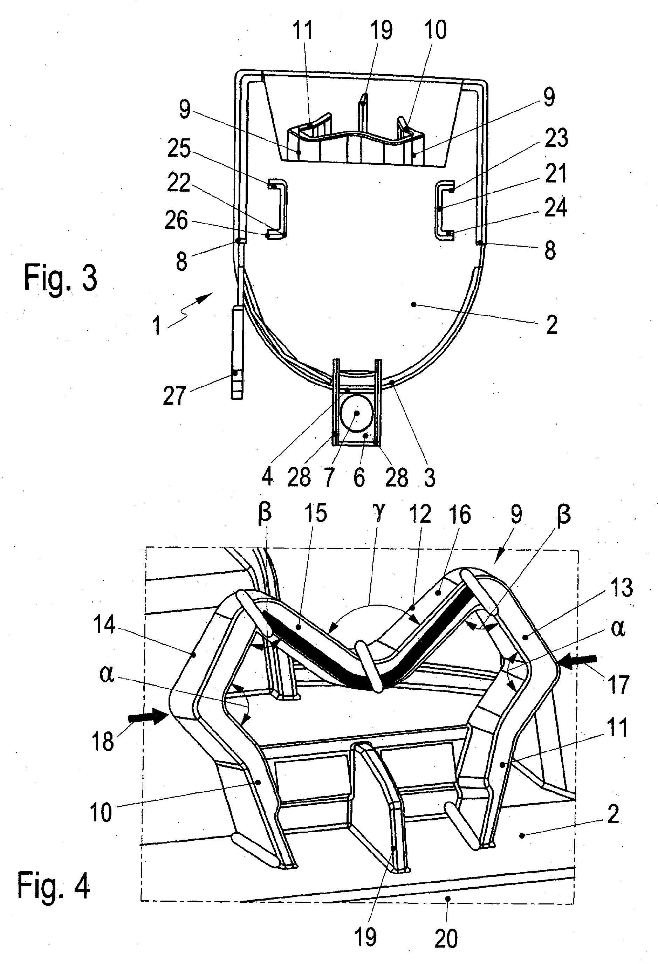

Weiterhin weist der Verschlussdeckel 1 an der Rückseite des Deckelelements 2 einen Federclip 9 auf, was in der Figur 4 vergrößert dargestellt ist. Dabei weist der Federclip 9 ausgehend von dem flächigen Deckelement 2 zwei beabstandete und schräg zueinander angeordnete erste Schenkel 10, 11 auf. Die ersten Schenkel 10, 11 weisen dabei eine variierende Wandstärke auf, so dass im Bereich benachbart zu dem Deckelelement 2 eine geringere Wandstärke vorliegt als in einem Bereich, der von dem Deckelelement 2 beabstandet ist.

Darüber hinaus weist der jeweilige Schenkel 10, 11 eine Krümmung auf, so dass er sich nach außen voneinander weg krümmt. Die beiden ersten Schenkel 10, 11 sind mittels eines Bügels 12 miteinander verbunden. Der Bügel ist dabei etwa M-förmig ausgebildet und ist durch zwei äußere zweite Schenkel 13, 14 und zwei innere Schenkel 15, 16 ausgebildet. Dabei sind die ersten Schenkel 10, 11 mit den zweiten Schenkeln 14, 13 verbunden, wobei zwischen den ersten Schenkeln und den zweiten Schenkeln ein Winkel α eingenommen wird, der etwa 90° bis 150° einnimmt. Im Ausführungsbeispiel der Figur 4 ist der Winkel α etwa 120°.

Die zweiten Schenkel 13, 14 sind mit den dritten Schenkeln 15, 16 jeweils verbunden, wobei auch zwischen dem zweiten Schenkel und dem dritten Schenkel ein Winkel β vorliegt, der etwa im Bereich um 90° bis 130° liegt. Im Ausführungsbeispiel der Figur 4 liegt der Winkel β bei etwa 90°.

Die beiden dritten Schenkel 15, 16 sind ebenso mittels eines Winkels γ miteinander verbunden, wobei der Winkel γ etwa bei 120° bis 150° liegt, wobei der Winkel γ im Ausführungsbeispiel der Figur 4 etwa 120° einnimmt.

Statt eines Winkels zwischen zweier Schenkel kann der Bügel 12 auch durch bogenförmig gemeinsam ausgebildete Schenkel ausgebildet sein.

Der Federclip 9 dient der Verrastung und Befestigung des Verschlussdeckels in der Öffnung. Dabei wird gemäß Figur 4 der Federclip in Querrichtung gemäß den Pfeilen 17, 18 beaufschlagt bis die Beaufschlagungskraft ausreicht, die ersten Schenkel soweit zusammenzudrücken, dass der Federclip 9 in die Öffnung gleiten kann. Hierbei wirken die zweiten und dritten Schenkel als Biegebalken.

Im Anschluss daran dehnt sich der Federclip wieder entgegen der Richtung der Pfeile 17, 18 aus und bewirkt eine Zugkraft um den Verschlussdeckel in die Öffnung hineinzuziehen.

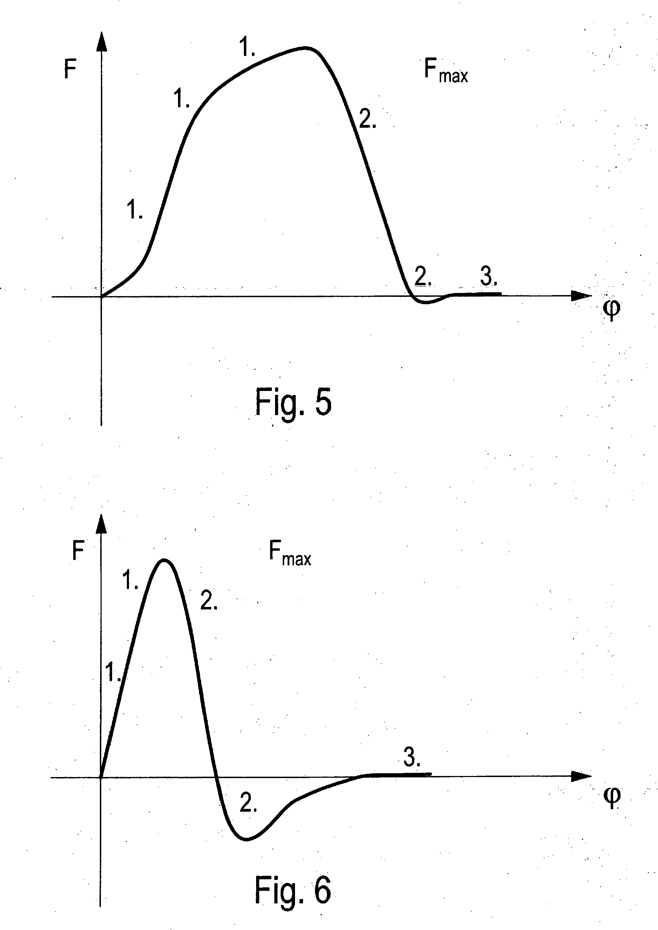

Die Figur 6 zeigt dies sehr deutlich, wobei in der Figur 6 die Kraft als Funktion der Verbiegung ϕ in γ-Richtung gemäß der Verbindungslinie der Pfeile 17, 18 aufgetragen ist.

Es ist zu erkennen, dass der in der Phase 1 bei Beaufschlagung des Verschlussdeckels 1 an die Öffnung beispielsweise einer Bugverkleidung die laterale Kraft auf die ersten Schenkel 10, 11 ansteigt, bis die beiden Schenkel 10, 11 soweit zusammengedrückt sind, dass der Federclip 9 in die Öffnung eingreifen kann. In der Phase 2 findet dann eine Reduktion der Kraft statt, wobei sogar eine Zugkraft mit negativen Kraftwerten entsteht, um den Verschlussdeckel 1 in die Öffnung zu ziehen. Im Bereich 3 ist dann der Federclip 9 eingerastet und der Verschlussdeckel 1 liegt am Rand der Öffnung an.

Die Figur 5 zeigt im Vergleich dazu eine Kraftkennlinie einer herkömmlichen Verschlussverbindung mittels eines Hakens, wobei deutlich zu erkennen ist, dass die Kraft-Weg-Relation deutlich ungünstiger ist. Bei etwas erhöhter Kraft muss ein größerer Weg zurückgelegt werden, um die Öffnung zu hintergreifen, wobei der Bereich der Zugkraft nahezu verschwindend ist.

Der erfindungsgemäße Verschlussdeckel 1 mit dem beschriebenen Federclip 9 weist weiterhin Zentrierelemente auf, die der Zentrierung des Verschlussdeckels in der dafür vorgesehenen Öffnung dienen.

Dazu ist zwischen den ersten Schenkeln 10, 11 ein Steg 19 angeordnet, welcher parallel zu der Erstreckung der ersten Schenkel 10, 11 ausgerichtet ist und zum Rand 20 des flächigen Deckelelements 1 hin abfällt. Dieser Steg 19 dient der Zentrierung in der Öffnung.

Weiterhin sind zwischen dem abgewinkelten Halteelement 6 und dem Federclip 9 zwei Stege 21, 22 vorgesehen, die bevorzugt U-förmig im Schnitt ausgebildet sind, wobei dadurch jeweils zwei Endbereiche 23, 24 und 25, 26 entstehen, die seitlich abstehen, wobei die Ausrichtung der U-förmigen Endbereiche senkrecht zum Steg 19 ausgerichtet sind.

Auch ist zu erkennen, dass die Endbereiche 23 bis 26 einen bogenförmig gekrümmten Verlauf zeigen, so dass dadurch eine Zentrierung des Verschlussdeckels 1 möglich ist.

Der Steg 19 zentriert den Verschlussdeckel in z-Richtung, die beiden Elemente 21, 22 zentrieren den Verschlussdeckel in y-Richtung und das abgewinkelte Haltelement als auch der Federclip zentrieren den Verschlussdeckel in x-Richtung. Dabei ist die x-Richtung die Fahrzeuglängsrichtung, die z-Richtung die Fahrzeughochrichtung und die γ-Richtung die Fahrzeugquerrichtung.

Weiterhin ist an dem Verschlussdeckel 1 ein Fangelement 27 vorgesehen, mittels welchem mittels der Widerhaken 29 das Fangelement 27 in eine Öffnung eingesetzt werden kann, wobei bei Entfernen des Verschlussdeckels 1 aus der zu verschließenden Öffnung der Verschlussdeckel 1 über das Fangelement 27 gehalten bleibt und nicht verlorengehen kann.

## Patentansprüche

1. Verschlussdeckel (1) mit einem im Wesentlichen flächigen Deckelelement (2) mit einem abgewinkelten Halteelement (4) und einem bogenförmigen Federclip (9), welcher von dem flächigen Deckelelement (2) absteht, **dadurch gekennzeichnet, dass** der Federclip (9) ausgehend von dem Deckelelement (2) zwei beabstandete und derart schräg angeordnete erste Schenkel (10,11) aufweist, die von einander weg gerichtet sind, wobei die beiden ersten Schenkel durch einen Bügel (12) miteinander verbunden sind, wobei der Bügel (12) M-förmig aus zwei äußeren zweiten Schenkeln (13,14) und zwei inneren dritten Schenkeln (15,16) ausgebildet ist, wobei die äußeren zweiten Schenkel (13,14) aufeinander zu geneigt sind und die zwei dritten Schenkel (15,16) voneinander weg geneigt sind, so dass die M-förmige Kontur erzeugt wird.

2. Verschlussdeckel nach Anspruch 1, **dadurch gekennzeichnet, dass** jeweils einer der beiden äußeren zweiten Schenkel (13,14) mit einem der ersten Schenkel (10,11) verbunden sind, wobei zwischen dem ersten Schenkel und dem zweiten Schenkel ein Winkel (α) eingeschlossen ist.

3. Verschlussdeckel nach Anspruch 1 oder 2, **dadurch gekennzeichnet, dass** jeweils einer der beiden äußeren zweiten Schenkel (13,14) mit einem der dritten Schenkel (15,16) verbunden sind, wobei zwischen dem zweiten Schenkel und dem dritten Schenkel ein Winkel (β) eingeschlossen ist.

4. Verschlussdeckel nach Anspruch 1, 2 oder 3, **dadurch gekennzeichnet, dass** die beiden dritten Schenkel (15,16) miteinander verbunden sind, wobei zwischen den dritten Schenkeln (15,16) ein Winkel (γ) eingeschlossen ist.

5. Verschlussdeckel nach einem der vorhergehenden Ansprüche 1 bis 4, **dadurch gekennzeichnet, dass** jeweils einer der beiden äußeren zweiten Schenkel (13,14) mit einem der ersten Schenkel (10,11) bogenförmig miteinander verbunden ausgebildet sind und/oder jeweils einer der beiden äußeren zweiten Schenkel (13,14) mit einem der dritten Schenkel (15,16) bogenförmig miteinander verbunden ausgebildet sind und /oder die beiden dritten Schenkel (15,16) bogenförmig miteinander verbunden ausgebildet sind.

6. Verschlusselement nach zumindest einem der vorhergehenden Ansprüche, **dadurch gekennzeichnet, dass** weiterhin Zentrierelemente (19,21,22) vorgesehen sind, die stegartig von dem flächigen Deckelelement (2) vorstehen.

7. Verschlusselement nach einem der vorhergehenden Ansprüche, **dadurch gekennzeichnet, dass** zwischen den beiden ersten Schenkel (10,11) ein erster Steg (19) angeordnet ist.

8. Verschlusselement nach einem der vorhergehenden Ansprüche, **dadurch gekennzeichnet, dass** im Flächenbereich zwischen dem abgewinkelten Halteelement (4) und dem bogenförmigen Federclip (9) zwei zweite Stege (21,22) beabstandet voneinander angeordnet sind.

9. Verschlusselement nach Anspruch 8, **dadurch gekennzeichnet, dass** die zweiten Stege (21,22) im Schnitt u-förmig ausgebildet sind.

10. Verschlusselement nach einem der vorhergehenden Ansprüche, **dadurch gekennzeichnet, dass** das flächige Deckelelement (2) an seinem Rand einen seitlich hochstehenden Kragen (8) aufweist.

11. Verschlusselement nach zumindest einem der vorhergehenden Ansprüche, **dadurch gekennzeichnet, dass** mit dem flächigen Deckelelement (2) ein Fangelement (27) verbunden ist.

## Claims

1. Closure cap (1) having a substantially planar cap element (2) having an angled retaining element (4) and a curved spring clip (9) which projects from the planar cap element (2), **characterized in that** the spring clip (9), proceeding from the cap element (2), has two first legs (10, 11) which are spaced apart and obliquely disposed in such a manner that they are oriented so as to face away from one another, wherein the two first legs are interconnected by a bracket (12), wherein the bracket (12) is configured so as to be M-shaped from two outer second legs (13, 14) and two inner third legs (15, 16) wherein the outer second legs (13, 14) are inclined towards one another and the two third legs (15, 16) are inclined away from one another, such that the M-shaped contour is produced.

2. Closure cap according to Claim 1, **characterized in that** in each case one of the two outer second legs (13, 14) is connected to one of the first legs (10, 11), wherein an angle (α) is enclosed between the first leg and the second leg.

3. Closure cap according to Claim 1 or 2, **characterized in that** in each case one of the two outer second legs (13, 14) is connected to one of the third legs (15, 16), wherein an angle (β) is enclosed between the second leg and the third leg.

4. Closure cap according to Claim 1, 2, or 3, **characterized in that** the two third legs (15, 16) are interconnected, wherein an angle (γ) is enclosed between the third legs (15, 16).

5. Closure cap according to one of the preceding Claims 1 to 4, **characterized in that** in each case one of the two outer second legs (13, 14) is configured so as to be connected in a curved manner to one of the first legs (10, 11), and/or that in each case one of the two outer second legs (13, 14) is configured so as to be connected in a curved manner to one of the third legs (15, 16), and/or that the two third legs (15, 16) are configured so as to be interconnected in a curved manner.

6. Closure element according to at least one of the preceding claims, **characterized in that** furthermore centring elements (19, 21, 22) which project in a web-like manner from the planar cap element (2) are provided.

7. Closure element according to one of the preceding claims, **characterized in that** a first web (19) is disposed between the two first legs (10, 11).

8. Closure element according to one of the preceding claims, **characterized in that** in the area between the angled retaining element (4) and the curved spring clip (9) two second webs (21, 22) are disposed so as to be spaced apart from one another.

9. Closure element according to Claim 8, **characterized in that** the second webs (21, 22) in the cross section are configured so as to be U-shaped.

10. Closure element according to one of the preceding claims, **characterized in that** the planar cap element (2) on its periphery has a laterally upright collar (8).

11. Closure element according to at least one of the preceding claims, **characterized in that** a catch element (27) is connected to the planar cap element (2).

## Revendications

1. Couvercle de fermeture (1) avec un élément de couvercle (2) pour l'essentiel plat avec un élément d'arrêt (4) coudé et un clip de ressort (9) de forme arquée saillant hors de l'élément de couvercle (2) plat, **caractérisé en ce que** le clip de ressort (9) comporte en partant de l'élément de couvercle (2) deux premiers côtés (10, 11) espacés l'un par rapport à l'autre et disposés de telle sorte de façon oblique qu'ils s'écartent l'un de l'autre, les deux premiers côtés étant reliés entre eux par un cintre (12), le cintre (12) étant réalisé en forme de M à partir de deux deuxièmes côtés (13, 14) extérieurs et de deux troisièmes côtés (15, 16) intérieurs, les deuxièmes côtés (13, 14) extérieurs étant inclinés l'un vers l'autre et les deux troisièmes côtés (15, 16) étant inclinés de façon à s'écarter l'un par rapport à l'autre, de façon à réaliser un contour en forme de M.

2. Couvercle de fermeture selon la revendication 1, **caractérisé en ce que** respectivement un des deux deuxièmes côtés (13, 14) extérieurs est relié à un des premiers côtés (10, 11), un angle (α) étant présent entre le premier côté et le deuxième côté.

3. Couvercle de fermeture selon la revendication 1 ou 2, **caractérisé en ce que** respectivement un des deux deuxièmes côtés (13, 14) extérieurs est relié à un des troisièmes côtés (15, 16), un angle (β) étant présent entre le deuxième côté et le troisième côté.

4. Couvercle de fermeture selon la revendication 1, 2 ou 3, **caractérisé en ce que** les deux troisièmes côtés (15, 16) sont reliés entre eux, un angle (y) étant présent entre les troisièmes côtés (15, 16).

5. Couvercle de fermeture selon l'une quelconque des revendications précédentes 1 à 4, **caractérisé en ce que** respectivement un des deux deuxièmes côtés (13, 14) extérieurs est réalisé de façon à être relié en forme d'arc à un des premiers côtés (10, 11) et/ou que respectivement un des deux deuxièmes côtés (13, 14) extérieurs est réalisé de façon à être relié en forme d'arc à un des troisièmes côtés (15, 16) et/ou que les deux troisièmes côtés (15, 16) sont reliés entre eux en forme d'arc.

6. Élément de fermeture selon au moins l'une quelconque des revendications précédentes, **caractérisé en ce que** des éléments de centrage (19, 21, 22) sont prévus en sus, lesdits éléments saillant à la façon d'une passerelle hors de l'élément de couvercle (2) plat.

7. Élément de fermeture selon l'une quelconque des revendications précédentes, **caractérisé en ce qu'**une première passerelle (19) est disposée entre les deux premiers côtés (10, 11).

8. Élément de fermeture selon l'une quelconque des revendications précédentes, **caractérisé en ce que** deux deuxièmes passerelles (21, 22) sont disposées à une certaine distance l'une de l'autre dans la zone superficielle prévue entre l'élément d'arrêt coudé (4) et le clip de ressort de forme arquée (9).

9. Élément de fermeture selon la revendication 8, **caractérisé en ce que** les deuxièmes passerelles (21, 22) présentent une section en forme de U.

10. Élément de fermeture selon l'une quelconque des revendications précédentes, **caractérisé en ce que** l'élément de couvercle (2) plat comporte au niveau de son bord un col (8) de niveau élevé en côté.

11. Élément de fermeture selon au moins l'une quelconque des revendications précédentes, **caractérisé en ce qu'**un élément d'accrochage (27) est relié à l'élément de couvercle (2) plat.
